# EUROPEAN PATENT APPLICATION

(11) **EP 4 586 571 A1**
(43) Date of publication of application: **16.07.2025**
(21) Application number: 25151603.5
(22) Date of filing: 13.01.2025
(51) Int. Cl.: H04L 27/233, H04L 27/26

(54) **WIRELESS COMMUNICATIONS SYNCHRONIZATION**

(30) Priority: 15.01.2024 US 202418412775
(71) Applicant: NXP B.V., 5656 AG Eindhoven (NL)
(72) Inventor: Mertens, Christophe Olivier, 5656AG Eindhoven (NL)
(74) Representative: Miles, John Richard

(57) **Abstract**

One example discloses a first wireless device, including: a receiver configured to receive a symbol sequence in a wireless communication frame transmitted from a second wireless device; a first demodulator configured to generate a first differential symbol sequence by differentiating the received symbol sequence; a first correlator configured to compare the first differential symbol sequence to a first differential sync word; wherein the first correlator is configured to generate a first match signal if the first differential symbol sequence substantially matches the first differential sync word; a second demodulator configured to generate a second differential symbol sequence by differentiating the first differential symbol sequence; a second correlator configured to compare the second differential symbol sequence to a second differential sync word; wherein the second correlator is configured to generate a second match signal if the second differential symbol sequence substantially matches the second differential sync word.

## Description

The present specification relates to systems, methods, apparatuses, devices, articles of manufacture and instructions for wireless communications synchronization.

### SUMMARY

According to an example embodiment, a first wireless device, comprising: a receiver configured to receive a symbol sequence in a wireless communication frame transmitted from a second wireless device; a first demodulator configured to generate a first differential symbol sequence by differentiating the received symbol sequence; a first correlator configured to compare the first differential symbol sequence to a first differential sync word; wherein the first correlator is configured to generate a first match signal if the first differential symbol sequence substantially matches the first differential sync word; a second demodulator configured to generate a second differential symbol sequence by differentiating the first differential symbol sequence; a second correlator configured to compare the second differential symbol sequence to a second differential sync word; wherein the second correlator is configured to generate a second match signal if the second differential symbol sequence substantially matches the second differential sync word; and wherein the first wireless device is configured to establish a link with the second wireless device if both the first match signal and the second match signal are generated.

In another example embodiment, the symbol sequence is a training sequence.

In another example embodiment, the training sequence is included in a preamble portion of the wireless communication frame.

In another example embodiment, the training sequence is a short training sequence (STS).

In another example embodiment, the first correlator is configured to compare the first differential symbol sequence to a complex conjugate of the first differential sync word; and the second correlator is configured to compare the second differential symbol sequence to a complex conjugate of the second differential sync word.

In another example embodiment, further comprising a symbol delay circuit configured to phase align the first match signal from the first correlator with the second match signal from the second correlator.

In another example embodiment, the symbol delay circuit is configured to compensate for a symbol delay added by the second differential demodulator.

In another example embodiment, further comprising a vectorial sum circuit configured to vectorially sum complex value signal outputs generated by the first correlator and the second correlator.

In another example embodiment, further comprising a peak detection circuit configured to detect a peak signal in the vectorially summed outputs from the first correlator and the second correlator.

In another example embodiment, the peak signal provides an indication of a best time to start sampling the wireless communication frame received from the second wireless device.

In another example embodiment, further comprising a frame sync, bit-time sync, carrier freq. offset detection circuit configured to calculate a carrier frequency offset, establish frame synchronization, and set an initial bit timing recovery for the established link.

In another example embodiment, the symbol sequence enables synchronization of a wireless link between the first wireless device and the second wireless device.

In another example embodiment, the first wireless device and the second wireless device are configured to exchange another communication frame after the synchronization.

In another example embodiment, the receiver is configured to detect the symbol sequence in each wireless communication frame transmitted from the second wireless device.

In another example embodiment, the symbol sequence is modulated using Quadrature Phase Shift Keying (QPSK) constellation points.

In another example embodiment, the symbol sequence is differentially modulated; and the first and second demodulators are differential demodulators.

In another example embodiment, the first device includes a decimator, DC offset compensation, and filter circuit.

According to an example embodiment, a method of synchronizing a first wireless device with a second wireless device, comprising: receiving a symbol sequence in a wireless communication frame transmitted from the second wireless device; generating a first differential symbol sequence by differentiating the received symbol sequence; comparing the first differential symbol sequence to a first differential sync word; generating a first match signal if the first differential symbol sequence matches the first differential sync word; generating a second differential symbol sequence by differentiating the first differential symbol sequence; comparing the second differential symbol sequence to a second differential sync word; generating a second match signal if the second differential symbol sequence matches the second differential sync word; and establishing a link between the first wireless device and the second wireless device if both the first match signal and the second match signal are generated.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents an example single correlator wireless device.
Figure 2 represents an example dual correlator wireless device.
Figure 3 represents an example dual correlator within the example dual correlator wireless device.
Figure 4 represents an example correlator within the dual correlator.
Figures 5A, 5B represent an example comparison between an absolute value signal output from the single correlator wireless device and an absolute value signal output from the dual correlator wireless device, when applying a -100 dBm wanted signal in presence of white gaussian noise.
Figures 6A, 6B represent another example comparison between an absolute value signal output the single correlator wireless device and an absolute value signal output the dual correlator wireless device, when applying no wanted signal, only white gaussian noise.
Figure 7 represents an example comparison between a percentage of missed frames for a given wanted signal level using either the single correlator wireless device or the dual correlator wireless device for various synchronization thresholds.
Figure 8 represents an example set of instructions for synchronizing a first wireless device with a second wireless device using the dual correlator wireless device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

For a wireless communication link to be established between a transmitting and a receiving wireless device, correct preamble detection of a known training sequence (TS) by the receiving device is required.

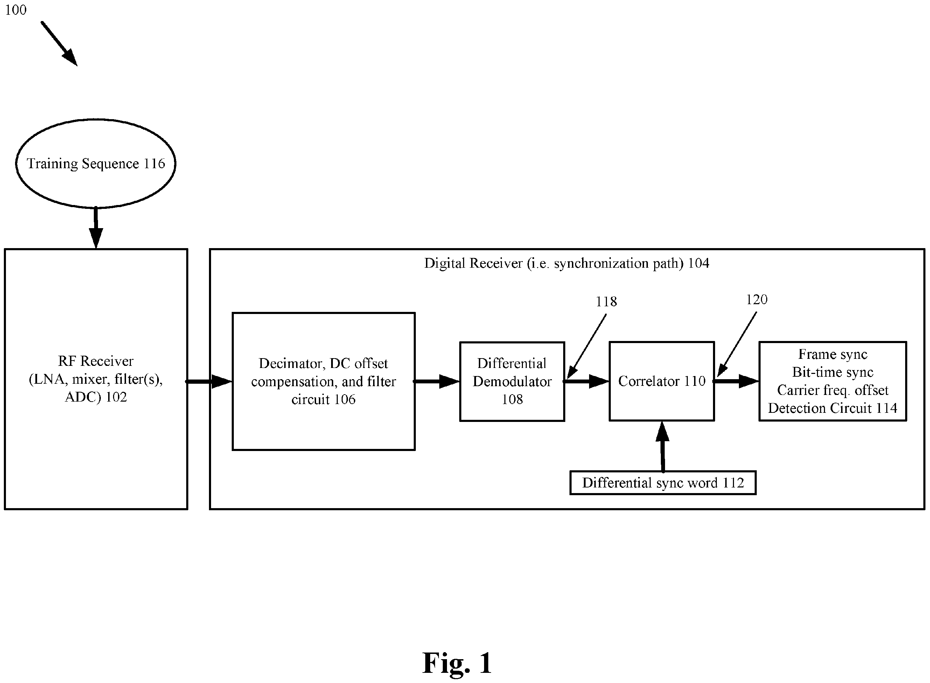

Figure 1 represents an example single correlator wireless device 100. The single correlator wireless device 100 includes an RF receiver 102 and a digital receiver 104.

The RF receiver 102 includes an RF and analogue front-end, embedding an optional LNA, a mixer for down-conversion, bandpass or lowpass filtering and analogue-to-digital converter.

The digital receiver 104 includes a decimator, DC offset compensation, and filter circuit 106, a differential demodulator 108, a correlator 110, a differential sync word 112, and a frame sync, bit-time sync, carrier freq. offset detection circuit 114.

A training sequence 116 in a wireless communications frame is received from a second wireless device (not shown) by the RF receiver 102 and passed to the digital receiver 104. The digital receiver 104 first performs decimation, DC offset compensation, and signal filtering using the decimator, DC offset compensation, and filter circuit 106.

The training sequence 116 is known by both the wireless device 100 and the second wireless device (not shown), and is used to identify a start of a wireless frame from a received RF wireless signal that includes background noise.

The differential demodulator 108 then demodulates the training sequence 116 to generate a differential training sequence 118. The correlator 110 compares the differential training sequence 118 to a pre-stored differential sync word 112. If the correlator 110 matches the differential training sequence 118 to the sync word 112 then the wireless device 100 generates a match signal 120 and establishes a wireless link with the second wireless device (not shown). After link establishment various communication frames (e.g. commands, payload data, etc.) can be exchanged between the wireless device 100 and the second wireless device.

Wireless communication devices however are often battery powered and as a consequence, low current consumption is of major importance for usage autonomy and user experience. Low current consumption can be achieved by configuring the transmitting device at a low as possible transmit power level, thus operating close to the sensitivity level of the receiving communication device.

This however makes it more difficult for the receiving device to correctly detect the transmitted preamble training sequence used for synchronization between transmitting and receiving device in order to establish a wireless link, due to both a weak carrier to noise ratio as to a likely carrier to interferer ratio.

Not being able to correctly detect this preamble training sequence at the beginning of a frame causes the receiving device to mark the entire frame with its associated payload data as lost and thus requests retransmission. Excessive retransmission not only impacts power consumption and quality of service, but also delays communications between wireless devices.

Proper TS synchronization enables communicating wireless devices to compensate for carrier frequency offset, and establish an initial timing recovery.

While receiver immunity can be improved by increasing the transmitting devices transmit power level, such a higher power transmit increases the transmitter's current consumption, and may not even be possible if reliability constraints on the transmitter's circuitry is limited by the semiconductor technology.

Now discussed is a dual correlator wireless device (e.g. single + double differential correlation) that increases a ratio of a wanted correlation peak as compared to correlation properties of (white gaussian) noise (e.g. SNR) so as to better detect a wireless symbol sequence (e.g. beginning of a wireless frame, training sequence detection for wireless link synchronization, etc.) and avoid undesirable requests for retransmission.

In various example embodiments, adding a second differential demodulator and second correlator improves a detectability of a wireless communication device's frame preamble pattern (e.g. for Bluetooth HDT).

However, this single + double differential correlation (i.e. a dual correlator) topology can be applied to any other preamble and/or frame pattern detection to increase SNR and improve symbol sequence detection.

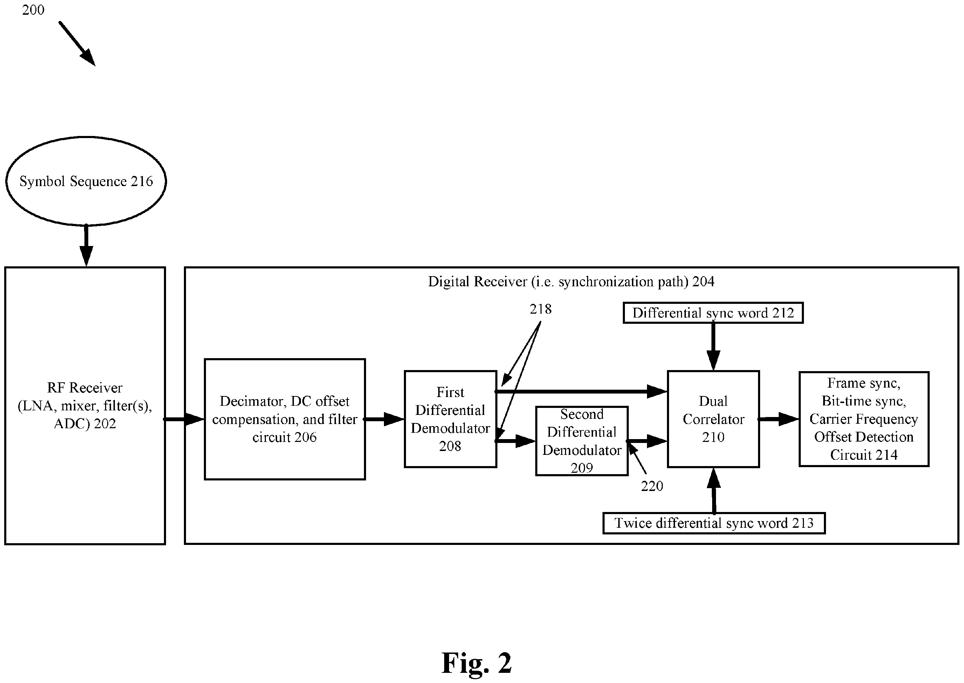

Figure 2 represents an example dual correlator wireless device 200. The example dual correlator wireless device 200 includes an RF receiver 202 and a digital receiver 204.

The RF receiver 202 includes an RF and analogue front-end, embedding an optional LNA, a mixer for down-conversion, bandpass or lowpass filtering and analogue-to-digital converter.

The digital receiver 204 includes a decimator, DC offset compensation, and filter circuit 206, a first differential demodulator 208, a second differential demodulator 209, a dual correlator 210, a differential sync word 212, a twice differential sync word 213, and a frame sync, bit-time sync, carrier freq. offset detection circuit 214.

A symbol sequence 216 in a wireless communications frame is received from a second wireless device (not shown) by the RF receiver 202 and passed to the digital receiver 204. The digital receiver 204 first performs decimation, DC offset compensation, and signal filtering using the decimator, DC offset compensation, and filter circuit 206. In some example embodiments the symbol sequence is modulated using Quadrature Phase Shift Keying (QPSK) constellation points.

The first differential demodulator 208 differentiates the symbol sequence 216 to generate a differential symbol sequence 218 (i.e. a first derivative of the symbol sequence 216).

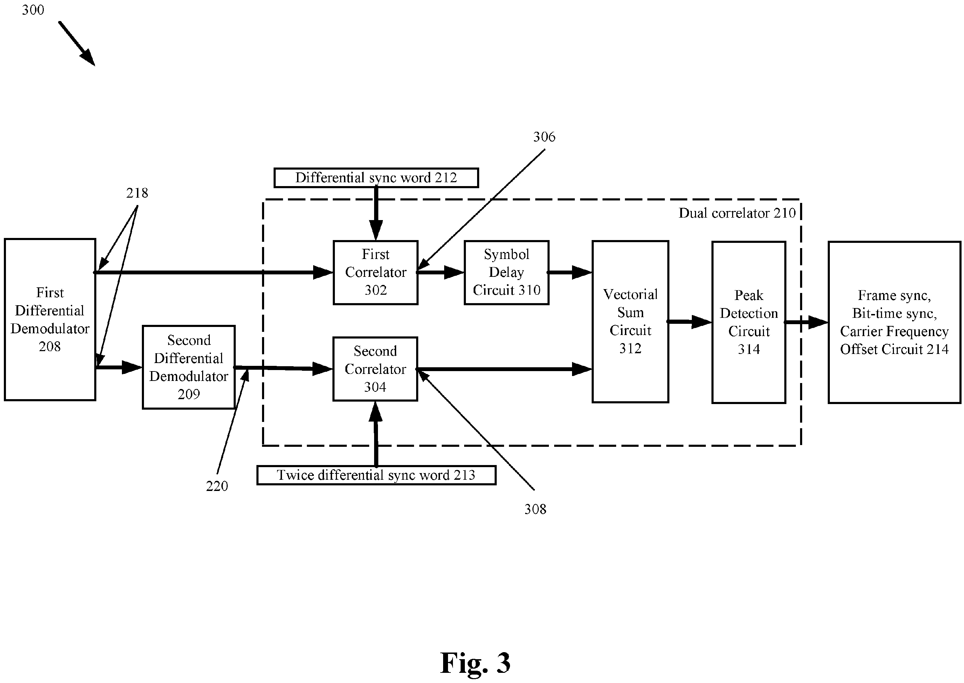

A first correlator (see Figure 3) in the dual correlator 210 compares the differential symbol sequence 218 to a pre-stored differential sync word 212. If the first correlator matches the differential symbol sequence 218 to the sync word 212 then the first correlator generates a first match signal (see Figure 3).

The second differential demodulator 209 differentiates the differential symbol sequence 218 to generate a twice differential symbol sequence 220 (i.e. a second derivative of the symbol sequence 216).

A second correlator (see Figure 3) in the dual correlator 210 compares the twice differential symbol sequence 220 to a pre-stored twice differential sync word 213. If the second correlator matches the twice differential symbol sequence 218 to the twice differential sync word 213 then the second correlator generates a second match signal (see Figure 3).

The wireless device 200 establishes a link with the second wireless device (not shown), if both the first match signal and the second match signal are generated. After link establishment various communication frames (e.g. commands, payload data, etc.) can be exchanged between the wireless device 100 and the second wireless device.

In various example embodiments the symbol sequence 216 is a training sequence (TS), a short training sequence (STS), or a sync word.

In some example embodiments, the first correlator (see Figure 3) and the second correlator (see Figure 3) in the dual correlator 210 correlates the differential symbol sequence 218 and the twice differential symbol sequence 220 with a complex conjugate of the differential sync word 212 and twice differential sync word 213 respectively.

Thus the wireless device 200 implements a dual structure for correlation, which performs a correlation calculation based on not only the single differentially demodulated symbol sequence 216 (i.e. input signal), but also on the twice differentially demodulated symbol sequence 216.

An increased output level of the dual correlator topology as compared to the single correlator topology of Figure 1, especially in a presence of a (weak) wanted signal combined with white gaussian noise. The dual correlator topology thus enables an increased capability of detecting the start of a frame in presence of noise and/or interference signals.

Figure 3 represents an example 300 dual correlator 210 within the example dual correlator wireless device 200. The example 300 shows a first correlator 302, a second correlator 304, a first match signal 306, and a second match signal 308 as discussed in Figure 2.

Additionally the example 300 dual correlator 210 includes a symbol delay circuit 310, a vectorial sum circuit 312, and a peak detection circuit 314.

The symbol delay circuit 310 phase aligns the first match signal 306 from the first correlator 302 with the second match signal 308 from the second correlator 304 to make up for a "symbol delay" added by the second differential demodulator 209.

The vectorial sum circuit 312 vectorially sums the complex value outputs generated by the first correlator 302 and the second correlator 304.

The peak detection circuit 314 detects a peak value in the vectorially summed outputs. The peak value provides an indication of a best/optimal time to start sampling the wireless communication signal from the second device and decode any commands and/or payload data therein. The angle of the complex number corresponding with the peak value is an initial estimation of the carrier frequency offset.

The frame sync, bit-time sync, carrier frequency offset detection circuit 214 then calculates the carrier frequency offset and establishes frame synchronization and an initial bit timing.

In some example embodiments, the dual correlator wireless device 200 is operated at a symbol_rate * OSR (over sampling ratio). The higher the OSR is, the higher a precision of the synchronization for more optimal eye opening.

The double differentiation introduces a symbol period delay compared to the single differentiation. That needs to be taken into account by using the symbol delay 306 circuit when combining both in the vectorial sum 308.

While the dual correlator's 210 operation is symbol rate agnostic, in an example embodiment the sync words contain one value per 2Mbaud symbol and the differential demodulators 208, 209 perform phase differentiation using a lag equal to a 2 Mbaud symbol duration (expressed in samples) and the correlator's 302, 304 adder tree is correlating the content of its input buffer data with taps distanced at the symbol duration.

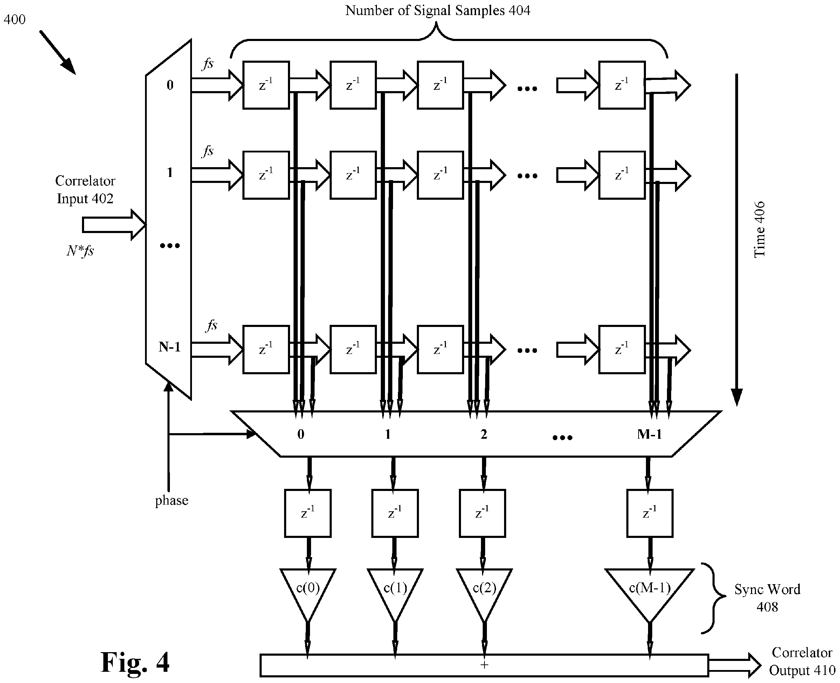

Figure 4 represents an example correlator 400 within the dual correlator 200. The example correlator 400 is one example of either or both the first correlator 302 and the second correlator 304.

The example correlator 400 includes a correlator input 402, a number of signal samples 404, a time sequence 406, a sync word 408, and a correlator output 410.

The example correlator 400 is a polyphase correlator known to those skilled in the art. The training sequence (e.g. sync words) shown in Figures 1, 2, 3 are represented by the constants C(0), c(1) ... etc. A number of input signal samples are represented by symbols z-1.

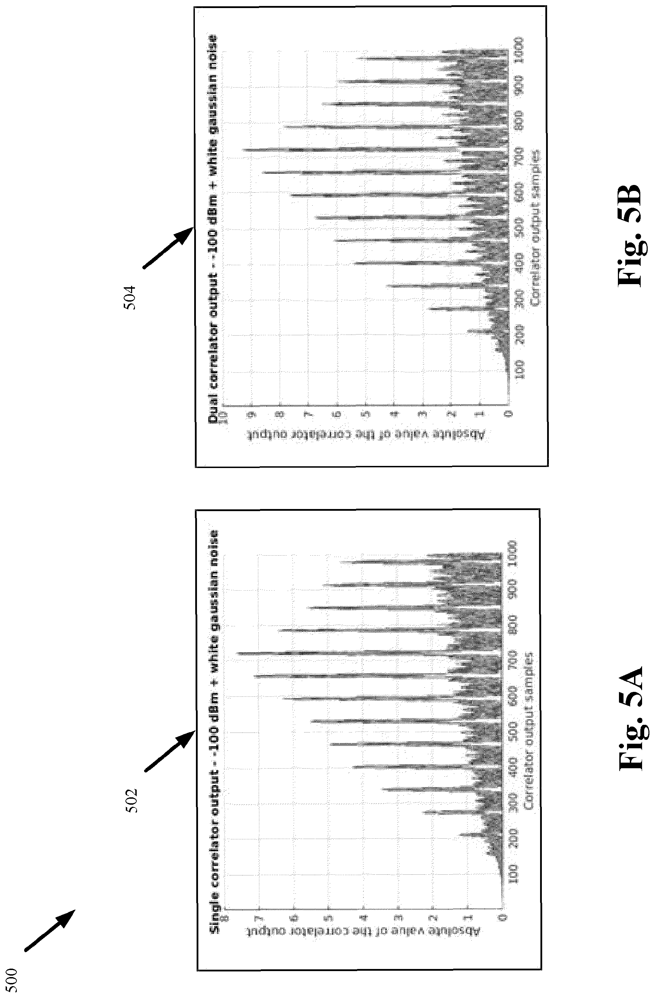

Figures 5A, 5B represent an example comparison 500 between an absolute value signal output 502 from the single correlator wireless device 100 and an absolute value signal output 504 from the dual correlator wireless device 200, when applying a -100 dBm wanted signal in presence of white gaussian noise.

In this comparison 500 both the single correlator wireless device 100 and the dual correlator wireless device 200 receive a -100 dBm signal including a training sequence in a presence of white gaussian noise.

The example comparison 500 is based on an example short synchronization header (e.g. training sequence) for the Bluetooth Low Energy (BLE) Higher Data Throughput (HDT) modes: a nine-fold repetition of the STS (short Training Sequence) [-1 -j j 1] (where, j=√-1).

In some example embodiments, the dual correlator wireless device 200 increases a wanted correlation peak by about 24%, whilst keeping an unwanted correlation on noise at about a same level, thereby improving a frame synchronization quality.

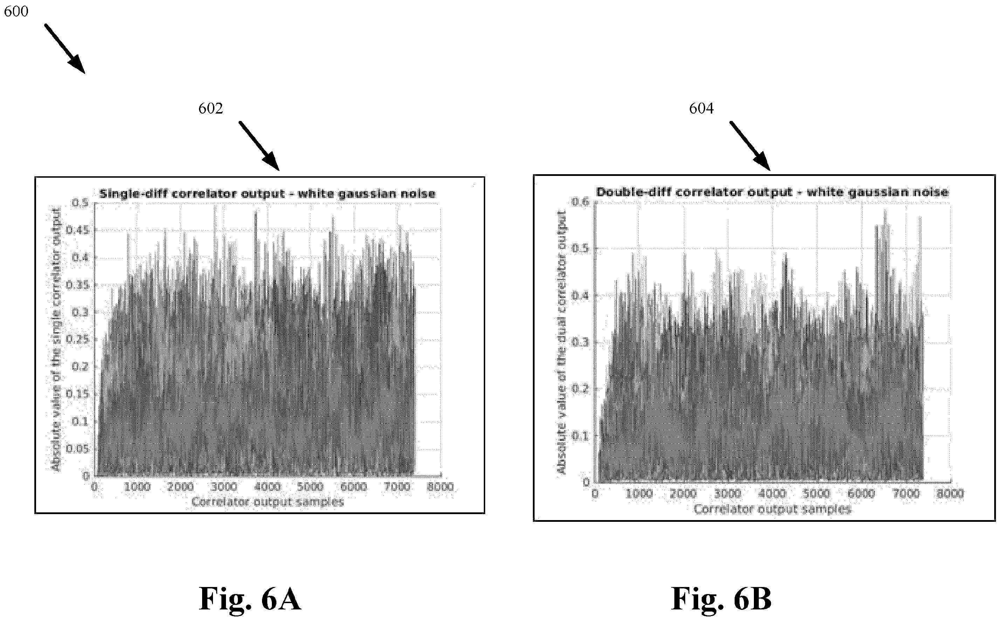

Figures 6A, 6B represent another example comparison 600 between an absolute value signal output 602 the single correlator wireless device 100 and an absolute value signal output 604 the dual correlator wireless device 200, when applying no wanted signal, only white gaussian noise.

In this example comparison 600 only the white gaussian noise is shown without any training sequence. This example comparison 600 shows that no additional noise is substantially added using the dual correlator wireless device 200 topology.

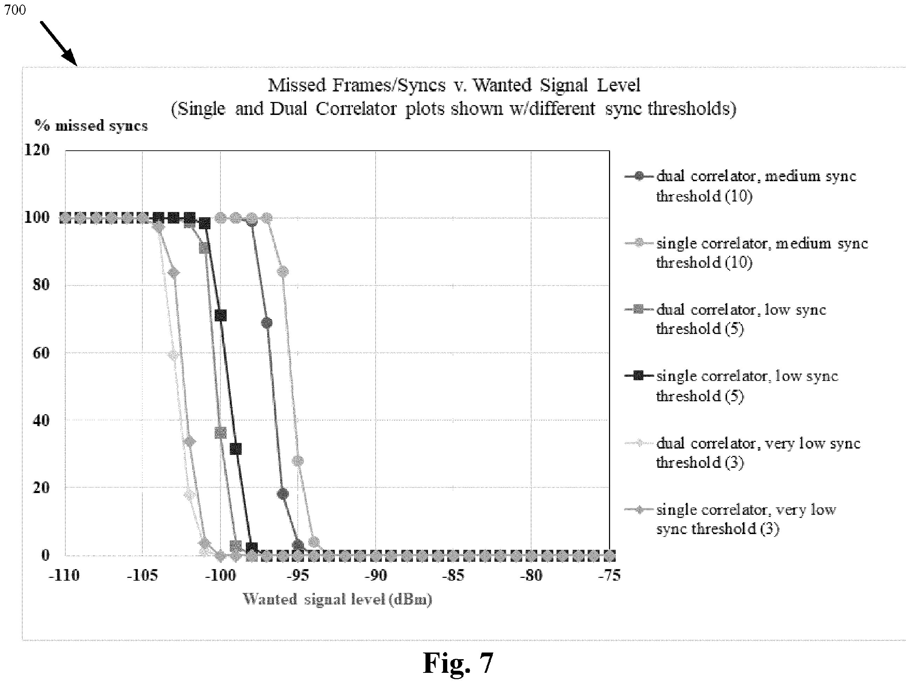

Figure 7 represents an example comparison 700 between a percentage of missed frames for a given wanted signal level using either the single correlator wireless device 100 or the dual correlator wireless device 200 for various synchronization thresholds.

The dual correlator wireless device 200 provides a receiver performance improvement of about 0.5 to 1 dB.

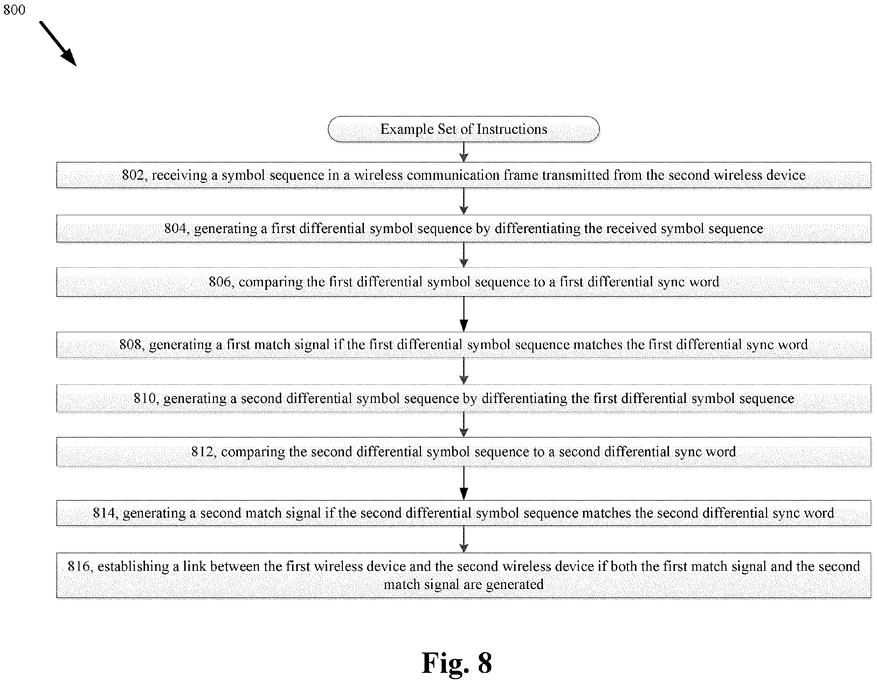

Figure 8 represents an example set of instructions 800 for synchronizing a first wireless device with a second wireless device using the dual correlator wireless device 200.

The order in which the instructions are discussed does not limit the order in which other example embodiments implement the instructions unless otherwise specifically stated. Additionally, in some embodiments the instructions are implemented concurrently.

The example instruction set 800 begins in 802, by receiving a symbol sequence in a wireless communication frame transmitted from the second wireless device. Next, in 804, generating a first differential symbol sequence by differentiating the received symbol sequence. Then in 806, comparing the first differential symbol sequence to a first differential sync word.

Next, in 808, generating a first match signal if the first differential symbol sequence matches the first differential sync word. Then in 810, generating a second differential symbol sequence by differentiating the first differential symbol sequence. Next, in 812, comparing the second differential symbol sequence to a second differential sync word;

In 814, generating a second match signal if the second differential symbol sequence matches the second differential sync word. Then in 816, establishing a link between the first wireless device and the second wireless device if both the first match signal and the second match signal are generated.

Various systems, such as the dual correlator wireless device 200 just discussed, can host these instructions. Such systems can include an input/output data interface, a processor, a storage device, and a non-transitory machine-readable storage medium. The machine-readable storage medium includes the instructions which control how the processor receives input data and transforms the input data into output data, using data within the storage device. The machine-readable storage medium in an alternate example embodiment is a non-transitory computer-readable storage medium. In other example embodiments the set of instructions described above can be implemented either using logic gates, application specific chips, firmware, as well as other hardware forms.

One example discloses a first wireless device, including: a receiver configured to receive a symbol sequence in a wireless communication frame transmitted from a second wireless device; a first demodulator configured to generate a first differential symbol sequence by differentiating the received symbol sequence; a first correlator configured to compare the first differential symbol sequence to a first differential sync word; wherein the first correlator is configured to generate a first match signal if the first differential symbol sequence substantially matches the first differential sync word; a second demodulator configured to generate a second differential symbol sequence by differentiating the first differential symbol sequence; a second correlator configured to compare the second differential symbol sequence to a second differential sync word; wherein the second correlator is configured to generate a second match signal if the second differential symbol sequence substantially matches the second differential sync word.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A first wireless device, comprising:
a receiver configured to receive a symbol sequence in a wireless communication frame transmitted from a second wireless device;
a first demodulator configured to generate a first differential symbol sequence by differentiating the received symbol sequence;
a first correlator configured to compare the first differential symbol sequence to a first differential sync word;
wherein the first correlator is configured to generate a first match signal if the first differential symbol sequence substantially matches the first differential sync word;
a second demodulator configured to generate a second differential symbol sequence by differentiating the first differential symbol sequence;
a second correlator configured to compare the second differential symbol sequence to a second differential sync word;
wherein the second correlator is configured to generate a second match signal if the second differential symbol sequence substantially matches the second differential sync word; and
wherein the first wireless device is configured to establish a link with the second wireless device if both the first match signal and the second match signal are generated.

2. The first wireless device of claim 1:
wherein the symbol sequence is a training sequence.

3. The first wireless device of claim 2:
wherein the training sequence is included in a preamble portion of the wireless communication frame.

4. The first wireless device of claim 2 or 3:
wherein the training sequence is a short training sequence (STS).

5. The first wireless device of any preceding claim:
wherein the first correlator is configured to compare the first differential symbol sequence to a complex conjugate of the first differential sync word; and
wherein the second correlator is configured to compare the second differential symbol sequence to a complex conjugate of the second differential sync word.

6. The first wireless device of any preceding claim:
further comprising a symbol delay circuit configured to phase align the first match signal from the first correlator with the second match signal from the second correlator.

7. The first wireless device of claim 6:
wherein the symbol delay circuit is configured to compensate for a symbol delay added by the second differential demodulator.

8. The first wireless device of any preceding claim:
further comprising a vectorial sum circuit configured to vectorially sum complex value signal outputs generated by the first correlator and the second correlator.

9. The first wireless device of any preceding claim:
further comprising a peak detection circuit configured to detect a peak signal in the vectorially summed outputs from the first correlator and the second correlator.

10. The first wireless device of claim 9:
wherein the peak signal provides an indication of a best time to start sampling the wireless communication frame received from the second wireless device.

11. The first wireless device of any preceding claim:
further comprising a frame sync, bit-time sync, carrier freq. offset detection circuit configured to calculate a carrier frequency offset, establish frame synchronization, and set an initial bit timing recovery for the established link.

12. The first wireless device of any preceding claim:
wherein the symbol sequence enables synchronization of a wireless link between the first wireless device and the second wireless device.

13. The first wireless device of claim 12:
wherein the first wireless device and the second wireless device are configured to exchange another communication frame after the synchronization.

14. The first wireless device of any preceding claim :
wherein the receiver is configured to detect the symbol sequence in each wireless communication frame transmitted from the second wireless device.

15. A method of synchronizing a first wireless device with a second wireless device, the method comprising:
receiving a symbol sequence in a wireless communication frame transmitted from the second wireless device;
generating a first differential symbol sequence by differentiating the received symbol sequence;
comparing the first differential symbol sequence to a first differential sync word;
generating a first match signal if the first differential symbol sequence matches the first differential sync word;
generating a second differential symbol sequence by differentiating the first differential symbol sequence;
comparing the second differential symbol sequence to a second differential sync word;
generating a second match signal if the second differential symbol sequence matches the second differential sync word; and
establishing a link between the first wireless device and the second wireless device if both the first match signal and the second match signal are generated.
